# EUROPÄISCHE PATENTSCHRIFT

(11) **EP 3 613 064 B1**
(45) Veröffentlichungstag und Bekanntmachung des Hinweises auf die Patenterteilung: **01.06.2022**
(21) Anmeldenummer: 18719505.2
(22) Anmeldetag: 17.04.2018
(51) Int. Cl.: H01C 1/14, H01C 7/12, H01C 7/10, H01C 7/18, H01C 7/102, H01C 1/148

(54) **VIELSCHICHTBAUELEMENT UND VERFAHREN ZUR HERSTELLUNG EINES VIELSCHICHTBAUELEMENTS**
MULTI-LAYER COMPONENT AND METHOD FOR PRODUCING A MULTI-LAYER COMPONENT
COMPOSANT MULTICOUCHE ET PROCÉDÉ DE FABRICATION D'UN COMPOSANT MULTICOUCHE

(30) Priorität: 20.04.2017 DE 102017108384
(43) Veröffentlichungstag der Anmeldung: 26.02.2020
(73) Patentinhaber: TDK Electronics AG, 81671 München (DE)
(72) Erfinder: PÜRSTINGER, Thomas, 8452 Großklein (AT)
(74) Vertreter: Epping - Hermann - Fischer
(86) Internationale Anmeldenummer: PCT/EP2018/059751
(87) Internationale Veröffentlichungsnummer: WO 2018/192912

(56) Entgegenhaltungen:
- DE-A1-102006 000 935
- DE-A1-102009 010 212
- DE-T2- 3 889 614
- US-A- 5 034 850

## Beschreibung

Es wird ein Vielschichtbauelement beschrieben. Ferner wird ein Verfahren zur Herstellung eines Vielschichtbauelements beschrieben.

Die parasitäre Kapazität von ESD-Schutzbauelementen darf auf Grund der immer höher werdenden Übertragungsfrequenzen der zu schützenden Leitungen bestimmte maximale Werte nicht überschreiten und muss zusätzlich zur niedrigen Kapazität eine geringe Streuung aufweisen. Ein ESD-Schutzbauelement besteht üblicherweise aus einem Material mit nichtlinearer U-I-Kennlinie, an das Innenelektroden herangeführt werden, die wiederum mit Außenelektroden verbunden sind. Um die parasitäre Kapazität der Elektrodenpaare zu minimieren, wird versucht die Überlappfläche zwischen den Innenelektroden bei gleichbleibendem Abstand so weit wie möglich zu minimieren. Aus der Druckschrift DE 102009007316 A1 ist ein elektrisches Vielschichtbauelement als ESD-Schutzbauelement bekannt. Durch Vorsehen einer dielektrischen Schicht mit einer gestanzten und mit einem (halb)leitenden Material gefüllten Öffnung wird die Überlappfläche der Innenelektroden getrennt und die parasitäre Kapazität somit reduziert.

DE 10 2006 000 935 A1 offenbart ein Vielschichtbauelement gemäß dem Oberbegriff von Anspruch 1.

Eine zu lösende Aufgabe besteht darin, ein verbessertes Vielschichtbauelement und ein entsprechendes Herstellungsverfahren anzugeben. Vorzugsweise soll ein einfaches und kostengünstiges Vielschichtbauelement angegeben werden, das ein ESD-Schutzbauelement mit verbesserten Eigenschaften, beispielsweise geringster Kapazität, aufweist.

Diese Aufgabe wird durch ein Vielschichtbauelement und ein Verfahren gemäß der unabhängigen Ansprüche gelöst. Vorteilhafte Ausgestaltungen des Vielschichtbauelements sind Gegenstand von Unteransprüchen.

Gemäß einem Aspekt wird ein Vielschichtbauelement angegeben. Das Vielschichtbauelement weist einen Grundkörper mit wenigstens zwei Außenelektroden und wenigstens einer ersten und einer zweiten Innenelektrode auf, wobei jeweils eine Innenelektrode elektrisch leitend mit einer Außenelektrode verbunden ist. Die jeweilige Innenelektrode ist entweder direkt oder über eine Durchkontaktierung mit der jeweiligen Außenelektrode elektrisch leitend verbunden.

Das Vielschichtbauelement weist ferner eine Mehrzahl von keramischen Schichten, vorzugsweise Varistorschichten, auf. Die keramischen Schichten umfassen die Innenelektroden. Die Innenelektroden sind fast gänzlich von einem Material der keramischen Schichten umgeben. Jedoch ist die jeweilige Innenelektrode wenigstens in einem Kontaktbereich zu der jeweiligen Außenelektrode frei kontaktierbar.

Das Vielschichtbauelement weist ferner wenigstens eine dielektrische Schicht auf. Das Vielschichtbauelement kann auch eine Mehrzahl von dielektrischen Schichten, beispielsweise zwei, fünf oder zehn dielektrische Schichten, aufweisen. Die dielektrische Schicht ist entlang einer Stapelrichtung der keramischen Schichten betrachtet zwischen den Innenelektroden angeordnet. Die dielektrische Schicht ist auf wenigstens einen Teilbereich einer der keramischen Schichten aufgedruckt, beispielsweise mittels Siebdruck oder Inkjetdruck.

Durch das teilweise Bedrucken einer keramischen Schicht mit dielektrischem Material kann auf einfache Weise die Überlappfläche zwischen den Innenelektroden verringert und so die parasitäre Kapazität reduziert werden. Vorzugsweise weist das Vielschichtbauelement eine Kapazität von kleiner oder gleich 0,5 pF, vorzugsweise 0,2 pF, auf. Durch das einfache Bedrucken von keramischen Schichten mit dielektrischem Material ist der Aufbau des Vielschichtbauelements ferner leicht realisierbar. Damit wird ein einfaches, kostengünstiges Vielschichtbauelement mit geringster Kapazität zur Verfügung gestellt.

Gemäß einem Ausführungsbeispiel weist die dielektrische Schicht eine Ausdehnung D entlang der Stapelrichtung der keramischen Schichten auf, wobei 2 µm ≤ D ≤ 6 µm. Dadurch dass die dielektrische Schicht aufgedruckt wird, kann eine sehr kleine Dicke der dielektrischen Schicht erzielt werden. Der Materialmix im Vielschichtbauelement ist dadurch erheblich reduziert. Unterschiedliche Ausdehnungen an Grenzschichten während des Herstellungsprozesses können vermieden werden.

Gemäß einem Ausführungsbeispiel ist die wenigstens eine dielektrische Schicht in einer Richtung senkrecht zur Stapelrichtung in wenigstens zwei voneinander separierte Abschnitte aufgeteilt. Mit anderen Worten, die dielektrische Schicht weist eine Aussparung auf.

Die Abschnitte werden beim Aufdrucken der dielektrischen Schicht automatisch erzeugt. Eine zusätzliche, nachträglich in die dielektrische Schicht eingebrachte, Öffnung entfällt. Die Abschnitte der dielektrischen Schicht sind durch ein Material der keramischen Schicht voneinander separiert. Der Einsatz von Verfüllmaterialien sowie ein zusätzlicher Befüllschritt entfallen dadurch. Es wird folglich ein vereinfachtes und kostengünstiges Vielschichtbauelement zur Verfügung gestellt.

Gemäß einem Ausführungsbeispiel weist die Aussparung zwischen den Abschnitten einen eckigen oder runden Querschnitt auf. Beim Drucken der dielektrischen Schicht kann die Geometrie der Aussparung in jeder beliebigen Form und mit hoher Genauigkeit ausgebildet werden und somit exakt an die Bauteilgeometrie angepasst werden.

Gemäß einem Ausführungsbeispiel weist die wenigstens eine dielektrische Schicht Magnesiumtitanat auf. Aber auch alternative Materialien sind vorstellbar. Die dielektrische Schicht wird in Form einer Tinte oder Paste auf die keramische Schicht aufgedruckt. Vorzugsweise werden damit Materialien eingesetzt, die in Form einer Tinte oder Paste druckbar sind.

Gemäß einem Ausführungsbeispiel ist die dielektrische Schicht derart ausgebildet und angeordnet, dass sie zusammen mit wenigstens zwei benachbarten Keramikschichten und zwei überlappenden Innenelektroden eine ESD-Entladungsstrecke bildet. Insbesondere weist das Vielschichtbauelement die Funktion eines Varistors als ESD-Schutzbauelement auf.

Gemäß einem weiteren Aspekt wird ein Verfahren zur Herstellung eines Vielschichtbauelements angegeben. Das Vielschichtbauelement entspricht vorzugsweise dem oben beschriebenen Vielschichtbauelement. Insbesondere kann das Herstellungsverfahren zur Herstellung eines wie oben beschriebenen Vielschichtbauelements dienen. Das Verfahren weist die folgenden Schritte auf:
- Bereitstellen von keramischen Schichten, wobei die keramischen Schichten Varistorschichten aufweisen. Die keramischen Schichten werden vorzugsweise in Form von Grünfolien bereitgestellt.
- Aufbringen eines Elektrodenmaterials, vorzugsweise einer Elektrodenpaste oder Tinte, auf eine Oberfläche eines Teils der keramischen Schichten zur Ausbildung von Innenelektroden. Vorzugsweise wird das Elektrodenmaterial auf die keramischen Schichten aufgedruckt. Das Elektrodenmaterial weist Silber und/oder Palladium auf.
- Teilweises Bedrucken der Oberfläche wenigstens einer keramischen Schicht mit einem dielektrischen Material zur Ausbildung wenigstens einer dielektrischen Schicht.

Vorzugsweise wird das dielektrische Material in Form einer Paste oder Tinte mittels Siebdruck oder Inkjetdruck auf die keramische Schicht aufgedruckt. Das dielektrische Material weist vorzugsweise Magnesiumtitanat auf. Durch das nur teilweise Bedrucken entsteht eine nicht durchgängige dielektrische Schicht, insbesondere eine dielektrische Schicht, die in Abschnitte unterteilt ist. Folglich weist die dielektrische Schicht automatisch wenigstens eine Aussparung auf. Das Drucken ermöglicht ein präzises Positionieren der Abschnitte bzw. der Ausnehmung zur Reduzierung der Überlappfläche zwischen den Innenelektroden.
- Stapeln der wenigstens einen mit dem dielektrischen Material bedruckten keramischen Schicht zwischen den mit dem Elektrodenmaterial versehenen keramischen Schichten.
- Pressen der keramischen Schichten zur Ausbildung eines Grundkörpers.
- Anordnen von Außenelektroden auf gegenüberliegenden Außenseiten des Grundkörpers.
- Sintern des Grundkörpers. Alternativ kann der Grundkörper auch vor dem Anordnen der Außenelektroden gesintert werden. In einem anschließenden Temperaturschritt werden dann die Außenelektroden eingebrannt.

Durch das Bedrucken von einer oder mehreren keramischen Schichten mit Dielektrikum in Form von Paste oder Tinte wird ein einfacher Aufbau des Vielschichtbauelements realisiert. Das Stanzen von Öffnungen in der dielektrischen Schicht zur Erzeugung einer reduzierten Überlappfläche zwischen den Innenelektroden mittels aufwändiger und teurer Lasertechnik wie im Stand der Technik entfällt.

Der Materialmix im Vielschichtbauelement wird ferner wesentlich reduziert, die damit verbundenen Probleme der unterschiedlichen Ausdehnungen an den Grenzschichten entfallen damit genauso wie ein mögliches Laminierproblem beim Abstapeln der dielektrischen Schicht auf der keramischen Schicht (siehe Stand der Technik) und umgekehrt.

Ferner entfällt die Verfüllung der Öffnung / Aussparung mittels Metallpaste, die bei nicht exakt positionierter, lasergestanzter Öffnung unmöglich und somit zu hohen Ausschussraten führt. Insgesamt wird durch das oben beschriebene Verfahren ein vereinfachtes und kostengünstiges Vielschichtbauelement mit geringster Kapazität bereitgestellt.

Das oben Beschriebene wird im Folgenden an Hand von Ausführungsbeispielen näher erläutert.

Die nachfolgend beschriebenen Zeichnungen sind nicht als maßstabsgetreu aufzufassen, vielmehr können die Darstellungen in einzelnen Dimensionen vergrößert, verkleinert oder auch verzerrt dargestellt sein.

Es zeigen:
- Figur 1: einen schematischen Aufbau eines Vielschichtbauelements gemäß dem Stand der Technik,
- Figur 2: einen Teilbereich des Vielschichtbauelements gemäß Figur 1,
- Figur 3: einen schematischen Aufbau eines erfindungsgemäßen Vielschichtbauelements und
- Figur 4: eine schematische Darstellung eines Verfahrens zur Herstellung des erfindungsgemäßen Vielschichtbauelements.

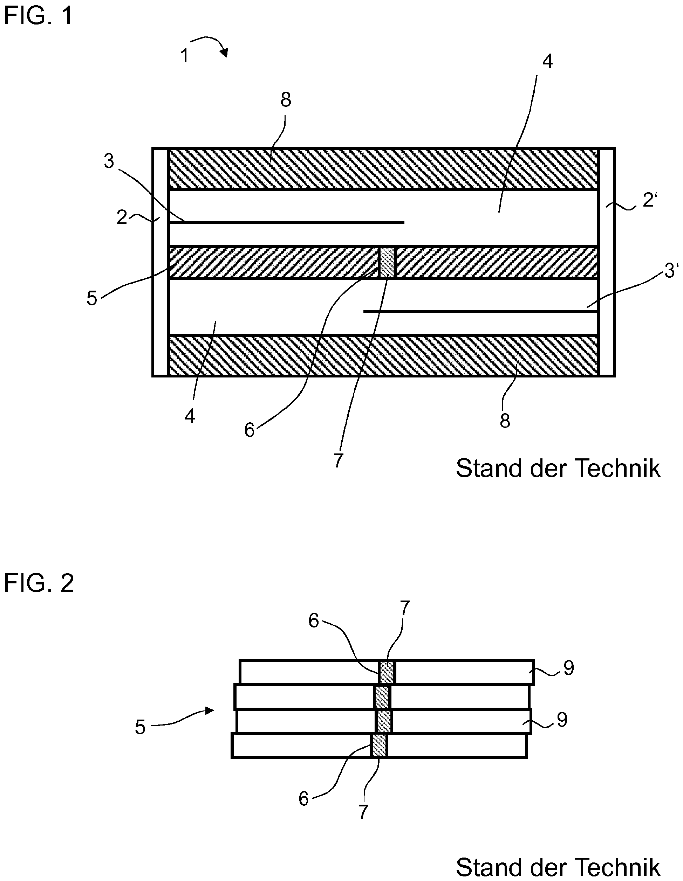

Die Figur 1 zeigt ein Vielschichtbauelement 1 gemäß dem Stand der Technik. Das Vielschichtbauelement 1 weist die Funktion eines Varistors als ESD-Schutzbauelement auf.

Das Vielschichtbauelement 1 weist insbesondere einen Grundkörper auf, an dessen Seitenflächen Außenelektroden 2, 2' angeordnet sind, welche mit im Inneren des Grundkörpers liegenden Innenelektroden 3, 3' elektrisch leitend verbunden sind. Der Grundkörper des Vielschichtbauelements 1 ist in Stapelrichtung von einem Trägermaterial 8 abgeschlossen. Das Trägermaterial 8 weist vorzugsweise wenigstens eine dielektrische Schicht auf.

Der Grundkörper weist ferner eine keramische Schicht 4, insbesondere eine Varistorschicht, auf. Die keramische Schicht 4 umfasst eine erste Innenelektrode 3. Die erste Innenelektrode 3 ist größtenteils von der keramischen Schicht 4 umschlossen. Das Vielschichtbauelement 1 weist ferner eine weitere keramische Schicht 4' auf, insbesondere eine weitere Varistorschicht. Die weitere keramische Schicht 4' umfasst eine zweite Innenelektrode 3', die von der weiteren keramischen Schicht 4' größtenteils umschlossen ist.

Zwischen der keramischen Schicht 4 und der weiteren keramischen Schicht 4' ist eine dielektrische Schicht 5 angeordnet. Die dielektrische Schicht 5 weist eine Öffnung oder Ausnehmung 6 auf. Die Öffnung 6 ist in die dielektrische Schicht 5 mittels Lasertechnik eingestanzt. Dies ist insbesondere an einer runden Geometrie der Öffnung 6 sowie an der Ausdehnung der dielektrischen Schicht 5 in Stapelrichtung (Dicke der dielektrischen Schicht 5) zu erkennen. Eine Laserbearbeitung lässt nur Öffnungen 6 mit runden Geometrien zu, deren Abmessungen und Zielposition auf der dielektrischen Schicht 5 stark streuen und nur schwer über die Laserleistung einstellbar sind. Die Ausdehnung der dielektrischen Schicht 5 in Stapelrichtung muss ferner groß genug sein, damit die Öffnung 6 überhaupt gestanzt werden kann. Beispielsweise weist die dielektrische Schicht 5 eine Ausdehnung in Stapelrichtung bzw. Dicke von wenigstens 100 µm auf. Die Öffnung 6 ist mit einem halbleitenden oder leitenden Material 7, beispielsweise Metall, gefüllt.

Durch die dielektrische Schicht 5 wird die Überlappfläche der Innenelektroden 3, 3' getrennt. Dadurch wird die parasitäre Kapazität des ESD-Schutzbauelements reduziert. Ein Durchmesser der Öffnung 6 beträgt zwischen 10 µm und 50 µm und erlaubt damit die Realisierbarkeit einer definierten, kleinen Überlappfläche der Innenelektroden 3, 3', wie in Figur 1 dargestellt ist.

Problematisch an dieser Lösung ist die Prozessierbarkeit der Öffnung 6, die nur sehr aufwändig mittels Laserstanzen und Verfüllen des gestanzten Lochs mit beispielsweise einer Metallpaste hergestellt werden kann. Zum Verfüllen der Öffnung 6 mit Metallpaste ist ferner ein zusätzlicher eigener Siebdruckprozess erforderlich. In vielen Fällen funktioniert die Füllung der Öffnung 6 von oben nur sehr aufwändig in Kombination mit einem Vakuum von unten. Dies macht die Herstellung des Vielschichtbauelements 1 kompliziert und teuer.

Die dielektrische Schicht 5 muss vor dem eigentlichen Laserstanzprozess zunächst vorverpresst werden, damit ein Stanzprozess überhaupt möglich wird. Das erneute Abstapeln der bereits gepressten und gestanzten dielektrischen Schicht 5 auf die keramische Schicht 4, 4' ist jedoch ohne Laminierprobleme beinahe unmöglich. Wird die dielektrische Schicht 5 mit vorgestanzter und gefüllter Öffnung 6 trotzdem zwischen den keramischen Schichten 4, 4' gestapelt, muss beim nachfolgenden Sinterschritt ein thermischer Mismatch zwischen den Materialen der keramischen Schichten 4, 4', der dielektrischen Schicht 5, den Außenelektroden 2, 2' sowie dem Verfüllmaterial der Öffnung 6 berücksichtigt werden.

Ferner ist eine Länge bzw. horizontale Ausdehnung (Ausdehnung senkrecht zur Stapelrichtung) der Öffnung 6 an die Dicke der dielektrischen (Einzel-)Schicht 5 gebunden. Werden mehrere bereits gestanzte dielektrische Schichten 5 übereinander gestapelt, um die Länge der Öffnung 6 zu erhöhen, muss das Laserstanzen mit sehr hoher Präzision immer am selben Punkt erfolgen, um einen Versatz der Öffnungen 6 im abgestapelten Zustand zu vermeiden (siehe Figur 2). Dies treibt die Ausschussrate in die Höhe und verkompliziert die Herstellung weiter.

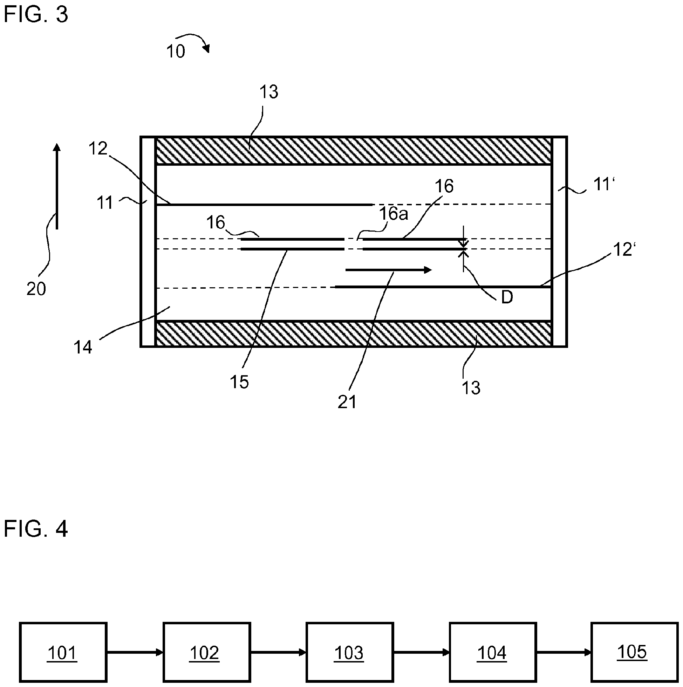

Das erfindungsgemäße Vielschichtbauelement 10 gemäß Figur 3 löst die oben beschriebenen Probleme auf einfache Art und Weise.

Die Figur 3 zeigt ein Vielschichtbauelement 10. Das Vielschichtbauelement 10 weist die Funktion eines Varistors als ESD-Schutzbauelement auf. Das Vielschichtbauelement 10 weist einen Grundkörper auf. Das Vielschichtbauelement 10, insbesondere der Grundkörper, weist wenigstens zwei Außenelektroden 11, 11' auf. Die Außenelektroden 11, 11' sind an gegenüberliegenden Außenflächen des Grundkörpers ausgebildet. Das Vielschichtbauelement 10, insbesondere der Grundkörper, weist wenigstens eine erste und eine zweite Innenelektrode 12, 12' auf. Die Innenelektroden 12, 12' weisen beispielsweise Silber und/oder Palladium auf. Die Innenelektroden 12, 12' weisen eine entgegengesetzte Polarität auf. Jeweils eine Innenelektrode 12, 12' ist elektrisch leitend mit einer Außenelektrode 11, 11' verbunden.

Das Vielschichtbauelement 10, insbesondere der Grundkörper, weist eine Mehrzahl von keramischen Schichten 14 auf. Die keramischen Schichten 14 weisen ein Varistormaterial auf. Beispielsweise weist das Varistormaterial Zinkoxid (ZnO) oder Praseodym (Pr) auf. Die keramischen Schichten 14 sind übereinander zu einem Stapel gestapelt. In Figur 3 sind die keramischen Schichten 14 im Stapel durch die gestrichelten Linien angedeutet. Folglich weist das Vielschichtbauelement 10 eine Stapelrichtung 20 sowie eine Richtung 21 senkrecht zur Stapelrichtung 20 auf, wie in Figur 3 dargestellt ist.

Die keramischen Schichten 14 umfassen die Innenelektroden 12, 12'. Insbesondere sind die Innenelektroden 12, 12' größtenteils von dem Stapel aus keramischen Schichten 14 umschlossen. Der Grundkörper des Vielschichtbauelements 10 ist in Stapelrichtung 20 von einem Trägermaterial 13 abgeschlossen, so dass die keramischen Schichten 14, die Innenelektroden 12, 12' und im Folgenden beschriebene dielektrischen Schichten 15 wie in Figur 3 gezeigt ist in Stapelrichtung 20 zwischen zwei Schichten mit dem Trägermaterial 13 angeordnet sind. Das Trägermaterial 13 weist vorzugsweise ein dielektrisches Material auf, um die parasitäre Kapazität der beiden Außenelektroden 11, 11' zu minimieren.

Das Vielschichtbauelement 10, insbesondere der Grundkörper, weist ferner wenigstens eine dielektrische Schicht 15 auf. Das Vielschichtbauelement 10 kann, wie in Figur 3 gezeigt ist, auch eine Vielzahl von dielektrischen Schichten 15, beispielsweise wie gezeigt zwei oder auch mehr als zwei, beispielsweise fünf oder zehn, dielektrische Schichten 15, aufweisen. Die eine oder die mehreren dielektrischen Schichten 15 sind - entlang der Stapelrichtung 20 der keramischen Schichten 14 betrachtet - zwischen den Innenelektroden 12, 12' ausgebildet. Mit anderen Worten sind oberhalb und unterhalb der einen oder der mehreren dielektrischen Schichten 15 die Innenelektroden 12, 12' ausgebildet. Die eine oder die mehreren dielektrischen Schichten 15 weisen beispielsweise Magnesiumtitanat auf. Die eine oder die mehreren dielektrischen Schichten 15 bilden zusammen mit wenigstens zwei oder mehr benachbarten Keramikschichten 14 und zwei überlappenden Innenelektroden 12, 12' eine ESD-Entladungsstrecke.

Die jeweilige dielektrische Schicht 15 ist auf eine keramische Schicht 14, insbesondere auf einen Teilbereich dieser keramischen Schicht 14, aufgedruckt, beispielsweise mittels Siebdruck oder Inkjetdruck. Die jeweilige dielektrische Schicht 15 wird in Form einer Paste oder Tinte auf die entsprechende keramische Schicht 14 aufgebracht. Insbesondere weist das dielektrische Material zur Ausbildung der dielektrischen Schicht 15 kein festes Material auf. Im Gegensatz zu der dielektrischen Schicht 6 gemäß Figur 1 ist die dielektrische Schicht 15 im fertigen Vielschichtbauelement 10 damit ein Bestandteil des Stapels aus keramischen Schichten 14.

Die dielektrische Schicht 15 weist eine sehr geringe Dicke oder Ausdehnung D entlang der Stapelrichtung 20 auf, wie in Figur 3 angedeutet ist. So liegt die Dicke D zwischen 2 µm und 6 µm, wobei die Grenzen jeweils eingeschlossen sind. Durch das Bedrucken einzelner keramischer Schichten 14 mit dielektrischen Material kann folglich auf jeder der keramischen Schichten jeweils eine sehr dünne dielektrische Schicht 15 erwirkt werden. Dies steht im Gegensatz zu der dielektrischen Schicht 6 aus Figur 1 die auf Grund des Herstellungsprozesses eine vielfach größere Dicke aufweist. Besonders bevorzugt weist das Vielschichtbauelement 10 somit eine Vielzahl von dielektrischen Schichten 15 auf, wobei die dielektrischen Schichten 15 entlang der Stapelrichtung 20 der keramischen Schichten 14 betrachtet übereinander zwischen den Innenelektroden 12, 12' angeordnet sind, wobei jede der dielektrischen Schichten 15 auf jeweils einen Teilbereich einer der keramischen Schichten 14 aufgedruckt ist und wobei die dielektrischen Schichten 15 jeweils eine Ausdehnung D mit 2 µm ≤ D ≤ 6 µm entlang der Stapelrichtung 20 der keramischen Schichten 14 aufweisen.

Die jeweilige dielektrische Schicht 15 ist nicht durchgängig auf der jeweiligen keramischen Schicht 14 ausgebildet, insbesondere aufgedruckt. Insbesondere ist die jeweilige dielektrische Schicht 15 in der Richtung 21 senkrecht zur Stapelrichtung 20 in wenigstens zwei Abschnitte 16 unterteilt. Diese Abschnitte 16 sind voneinander separiert. Mit anderen Worten befindet sich zwischen den Abschnitten 16 sich eine Aussparung 16a in der dielektrischen Schicht 15. Insbesondere befindet sich zwischen den Abschnitten 16 ein Material der keramischen Schicht 14.

Die Aussparung 16a der dielektrischen Schicht 15 entsteht beim Bedrucken der keramischen Schicht 14. Durch gezieltes Aufdrucken der dielektrischen Schicht 15 auf eine keramische Schicht 14 kann insbesondere auf präzise Weise eine Aussparung 16a mit vorbestimmter Geometrie und Größe erzeugt werden.

Damit ist die Aussparung 16a vergleichbar mit der im Zusammenhang mit Figur 1 beschriebenen Öffnung 6. Jedoch entsteht diese Aussparung 16a automatisch beim Drucken der dielektrischen Schicht 15. Ferner ist auch ein Füllen der Aussparung 16a redundant, da die Aussparung 16a zwischen den Abschnitten 16 einfach durch keramisches Material 14 eingenommen wird. Die Aussparung 16a zwischen den Abschnitten 16 weist eine variable Geometrie auf. Insbesondere kann die Aussparung 16a einen runden oder einen eckigen Querschnitt aufweisen. Ein Öffnungsdurchmesser der Aussparung 16a liegt zwischen 5 µm und 40 µm, beispielsweise bei 20 µm oder 25 µm.

Durch die dielektrische Schicht 15 wird eine Überlappfläche zwischen den gegenpoligen Innenelektroden 12, 12' auf einfache Art und Weise reduziert. Durch die speziell gestaltete dielektrische Schicht 15 weist das Vielschichtbauelement 10 eine Kapazität von ≤ 0,5 pF auf, beispielsweise 0,2 pF. Damit wird ein Vielschichtbauelement 10 mit geringster Kapazität bereit gestellt.

Erfindungsgemäß reichen die eine oder die mehreren dielektrischen Schichten 15, wie in Figur 3 gezeigt ist, nicht bis zu den Außenelektroden 11, 11`, sondern sind von diesen beabstandet. Damit reichen die eine oder die mehreren dielektrischen Schichten 15 anders als im Stand der Technik nicht über die gesamte Breite von Außenelektrode zu Außenelektroden des Vielschichtbauelements 10, sondern sind, wie gezeigt, durch Material der keramischen Schichten 14 von den Außenelektroden 11, 11' getrennt. Durch ein solches nicht vollständig bis zum Rand, also den Außenelektroden, reichendes Bedrucken mit dem Material der einen oder mehreren dielektrischen Schichten können ein Schwund und eine Ablösung der laminierten Schichten bei einem weiter unten beschriebenen Sintern minimiert oder ganz verhindert werden, da im Randbereich, also angrenzend an die Außenelektroden, nur mehr ein Keramikmaterial vorhanden ist anstelle von zwei Keramikmaterialien. Zusätzlich kann im Vergleich zum Stand der Technik Material gespart werden.

Im Vergleich zum Stand der Technik gemäß der Figuren 1 und 2 wird die dort gezeigte dielektrische Schicht 5 erfindungsgemäß somit einfach durch weitere keramische Schichten 14 ersetzt, auf denen dielektrisches Material aufgedruckt wird. Durch das Bedrucken der keramischen Schichten 14 mit Dielektrikum als Paste oder Tinte wird der gesamte Aufbau des Vielschichtbauelements 10 wesentlich einfacher realisiert. Das Stanzen von Öffnungen 6 mittels aufwändiger und teurer Lasertechnik entfällt. Ferner können die Geometrie der Aussparungen 16a und die Beabstandung der dielektrischen Schichten 15 von den Außenelektroden 11, 11' in jeder beliebigen geometrischen Form und mit höherer Genauigkeit ausgebildet und somit an die Bauteilgeometrie angepasst werden. Der Materialmix im Vielschichtbauelement 10 wird ferner wesentlich reduziert, die damit verbundenen Probleme der unterschiedlichen Ausdehnungen an den Grenzschichten zwischen dielektrischer Schicht 15 und keramischer Schicht 14 sowie an den Grenzschichten von dielektrischer Schicht 15 und Außenelektrode 11, 11' entfallen genauso wie ein mögliches Laminierproblem beim Abstapeln der dielektrischen Schicht 15 auf der keramischen Schicht 14 und umgekehrt.

Ferner entfällt die Verfüllung der Öffnung / Aussparung mittels Metallpaste, die bei nicht exakt positionierter, lasergestanzter Öffnung unmöglich ist und somit zu hohen Ausschussraten führt. Insgesamt wird ein wesentlich einfacheres und kostengünstiges Vielschichtbauelement 10 bereitgestellt.

Im Folgenden wird in Verbindung mit den Figuren 3 und 4 ein Verfahren zur Herstellung des Vielschichtbauelements 10 beschrieben. Alle Merkmale, die im Zusammenhang mit dem Vielschichtbauelement 10 beschrieben wurden, finden auch für das Verfahren Anwendung und umgekehrt.

In einem ersten Schritt 101 werden grüne keramische Folien (im Folgenden keramische Schichten 14) bereitgestellt. Die keramischen Schichten 14 weisen Varistorschichten auf. Es wird eine Vielzahl von keramischen Schichten 14 bereitgestellt.

In einem weiteren Schritt 102 wird ein Elektrodenmaterial auf eine Oberfläche eines Teils der keramischen Schichten 14 aufgebracht zur Ausbildung der Innenelektroden 12, 12'. Vorzugsweise werden die keramischen Schichten 14 mit einer Elektrodenpaste versehen. Die grüne Keramik wird mit der Elektrodenpaste in dem Elektrodenmuster beschichtet. Die Elektrodenpaste weist Silber und/oder Palladium auf.

In einem weiteren Schritt 103 wird die Oberfläche wenigstens einer keramischen Schicht 14 teilweise mit einem dielektrischen Material bedruckt zur Ausbildung wenigstens einer dielektrischen Schicht 15. Bevorzugt können zur Ausbildung einer Mehrzahl von dielektrischen Schichten 15 auch mehrere keramische Schichten 14 teilweise mit dem dielektrischen Material bedruckt werden. Das dielektrische Material weist vorzugsweise Magnesiumtitanat auf. Das dielektrische Material wird in Form einer Paste oder Tinte auf die keramische Folie aufgedruckt. Dies geschieht durch Siebdruck oder Inkjetdruck.

In einem weiteren Schritt 104 werden die eine oder die mehreren mit dem dielektrischen Material bedruckten keramischen Schicht 14 zwischen den mit dem Elektrodenmaterial versehenen keramischen Schichten 14 angeordnet (gestapelt). Anschließend wird der Stapel gepresst zur Ausbildung eines Grundkörpers.

In einem weiteren Schritt 105 werden die Außenelektroden 11, 11' auf gegenüberliegenden Außenseiten des Grundkörpers angeordnet. Anschließend wird der Grundkörper gesintert (Co-Sintern). In einem alternativen Ausführungsbeispiel können die Außenelektroden 11, 11' aber auch erst nach dem Sintern des Grundkörpers auf den Außenseiten aufgebracht werden. Dadurch wird ein weiterer Temperaturschritt nach dem Aufbringen der Außenelektroden 11, 11' erforderlich.

Die Beschreibung der hier angegebenen Gegenstände ist nicht auf die einzelnen speziellen Ausführungsformen beschränkt. Vielmehr können die Merkmale der einzelnen Ausführungsformen - soweit technisch sinnvoll - beliebig miteinander kombiniert werden.

### Bezugszeichenliste

- 1: Vielschichtbauelement
- 2, 2': Außenelektrode
- 3, 3': Innenelektrode
- 4, 4': Keramische Schicht
- 5: Dielektrische Schicht
- 6: Öffnung / Ausnehmung
- 7: Material
- 8: Trägermaterial
- 9: Dielektrische Einzelschicht

- 10: Vielschichtbauelement
- 11, 11': Außenelektrode
- 12, 12': Innenelektrode
- 13: Trägermaterial
- 14: Keramische Schicht
- 15: Dielektrische Schicht
- 16: Abschnitt
- 16a: Aussparung

- 20: Stapelrichtung
- 21: Richtung senkrecht zur Stapelrichtung

- 101, 102, 103, 104, 105: Verfahrensschritt

- D: Ausdehnung der dielektrischen Schicht

## Patentansprüche

1. Vielschichtbauelement (10) aufweisend einen Grundkörper mit
- wenigstens zwei Außenelektroden (11, 11),
- wenigstens einer ersten und einer zweiten Innenelektrode (12, 12'), wobei jeweils eine Innenelektrode (12, 12') elektrisch leitend mit einer Außenelektrode (11, 11') verbunden ist,
- einer Mehrzahl von keramischen Schichten (14), wobei die keramischen Schichten (14) die Innenelektroden (12, 12') umfassen,
- wenigstens einer dielektrischen Schicht (15), wobei die dielektrische Schicht (15) entlang einer Stapelrichtung (20) der keramischen Schichten (14) betrachtet zwischen den Innenelektroden (12, 12') angeordnet ist, und wobei die dielektrische Schicht (15) auf wenigstens einen Teilbereich einer der keramischen Schichten (14) aufgedruckt ist, wobei die dielektrische Schicht unmittelbar zwischen zwei keramischen Schichten (14) angeordnet ist,
**dadurch gekennzeichnet dass**,
die dielektrische Schicht (15) nicht bis zu den Außenelektroden (11, 11') reicht.

2. Vielschichtbauelement (10) nach Anspruch 1, wobei die keramischen Schichten (14) Varistorschichten aufweisen.

3. Vielschichtbauelement (10) nach Anspruch 1 oder 2, wobei die dielektrische Schicht (15) eine Ausdehnung D entlang der Stapelrichtung (20) der keramischen Schichten (14) aufweist, und wobei 2 µm ≤ D ≤ 6 µm.

4. Vielschichtbauelement (10) nach einem der vorangehenden Ansprüche,
wobei die dielektrische Schicht (15) dazu ausgebildet und angeordnet ist eine Überlappfläche zwischen gegenpoligen Innenelektroden (12, 12') zu reduzieren.

5. Vielschichtbauelement (10) nach einem der vorangehenden Ansprüche,
wobei die wenigstens eine dielektrische Schicht (15) in einer Richtung (21) senkrecht zur Stapelrichtung (20) in wenigstens zwei voneinander separierte Abschnitte (16) aufgeteilt ist, wobei die Abschnitte (16) durch ein Material der keramischen Schicht (14) voneinander separiert sind.

6. Vielschichtbauelement (10) nach Anspruch 5,
wobei eine Aussparung (16a) zwischen den Abschnitten (16) einen eckigen Querschnitt aufweist.

7. Vielschichtbauelement (10) nach Anspruch 5,
wobei eine Aussparung (16a) zwischen den Abschnitten (16) einen runden Querschnitt aufweist.

8. Vielschichtbauelement (10) nach einem der vorangehenden Ansprüche,
wobei die wenigstens eine dielektrische Schicht (15) Magnesiumtitanat aufweist.

9. Vielschichtbauelement (10) nach einem der vorangehenden Ansprüche,
wobei die dielektrische Schicht (15) derart ausgebildet und angeordnet ist, dass sie zusammen mit wenigstens zwei benachbarten Keramikschichten (14) und zwei überlappenden Innenelektroden (12, 12') eine ESD-Entladungsstrecke bildet.

10. Vielschichtbauelement (10) nach einem der vorangehenden Ansprüche,
wobei das Vielschichtbauelement (10) die Funktion eines Varistors als ESD-Schutzbauelement aufweist.

11. Vielschichtbauelement (10) nach einem der vorangehenden Ansprüche,
wobei das Vielschichtbauelement (10) eine Kapazität von ≤ 0,5 pF aufweist.

12. Vielschichtbauelement (10) nach einem der vorherigen Ansprüche mit einer Vielzahl von dielektrischen Schichten (15), wobei die dielektrischen Schichten (15) entlang einer Stapelrichtung (20) der keramischen Schichten (14) betrachtet übereinander zwischen den Innenelektroden (12, 12') angeordnet sind, wobei jede der dielektrischen Schichten (15) auf jeweils einen Teilbereich einer der keramischen Schichten (14) aufgedruckt ist und wobei die dielektrischen Schichten (15) jeweils eine Ausdehnung D mit 2 µm ≤ D ≤ 6 µm entlang der Stapelrichtung (20) der keramischen Schichten (14) aufweisen.

13. Vielschichtbauelement (10) nach einem der vorherigen Ansprüche,
wobei der Grundkörper des Vielschichtbauelements (10) in Stapelrichtung (20) von einem dielektrischen Trägermaterial (13) abgeschlossen ist.

14. Verfahren zur Herstellung eines Vielschichtbauelements (1), das die Funktion eines Varistors als ESD-Schutzbauelement aufweist, wobei das Verfahren die folgenden Schritte aufweist:
- Bereitstellen von keramischen Schichten (14), wobei die keramischen Schichten (14) Varistorschichten aufweisen,
- Aufbringen eines Elektrodenmaterials auf eine Oberfläche eines Teils der keramischen Schichten (14) zur Ausbildung von Innenelektroden (12, 12'),
- Teilweises Bedrucken der Oberfläche wenigstens einer keramischen Schicht (14) mit einem dielektrischen Material zur Ausbildung wenigstens einer dielektrischen Schicht (15),
- Stapeln der mit dem dielektrischen Material bedruckten keramischen Schicht (14) zwischen den mit dem Elektrodenmaterial versehenen keramischen Schichten (14),
- Pressen der keramischen Schichten (14) zur Ausbildung eines Grundkörpers,
- Anordnen von Außenelektroden (11, 11') auf gegenüberliegenden Außenseiten des Grundkörpers,
- Sintern des Grundkörpers, wobei die dielektrische Schicht unmittelbar zwischen zwei keramischen Schichten (14) angeordnet ist,
**dadurch gekennzeichnet dass**,
die dielektrische Schicht (15) nicht bis zu den Außenelektroden (11, 11') reicht.

15. Verfahren nach Anspruch 14,
wobei das dielektrische Material mittels Siebdruck oder Inkjetdruck auf die wenigstens eine keramische Schicht (14) aufgebracht wird.

16. Verfahren nach Anspruch 14 oder 15,
wobei das dielektrische Material Magnesiumtitanat aufweist.

17. Verfahren nach einem der Ansprüche 14 bis 16,
wobei das dielektrische Material als Paste oder Tinte auf die keramische Schicht (14) aufgebracht wird.

18. Verfahren nach einem der Ansprüche 14 bis 17,
wobei jeweils die Oberfläche einer Vielzahl von keramischen Schichten (14) mit dem dielektrischen Material teilweise bedruckt wird, so dass das Vielschichtbauelement nach dem Stapeln eine Vielzahl von dielektrischen Schichten (15) aufweist, wobei die dielektrischen Schichten (15) entlang einer Stapelrichtung (20) der keramischen Schichten (14) betrachtet übereinander zwischen den Innenelektroden (12, 12') angeordnet sind, wobei jede der dielektrischen Schichten (15) auf jeweils einen Teilbereich einer der keramischen Schichten (14) aufgedruckt ist und wobei die dielektrischen Schichten (15) jeweils eine Ausdehnung D mit 2 µm ≤ D ≤ 6 µm entlang der Stapelrichtung (20) der keramischen Schichten (14) aufweisen.

19. Verfahren nach einem der Ansprüche 14 bis 18,
wobei der Grundkörper des Vielschichtbauelements (10) in Stapelrichtung (20) mit einem dielektrischen Trägermaterial (13) abgeschlossen wird.

## Claims

1. Multilayer component (10) comprising a main body with
- at least two external electrodes, (11, 11'),
- at least one first and one second internal electrode (12, 12'), wherein each internal electrode (12, 12') is electrically conductively connected to an external electrode (11, 11'),
- a plurality of ceramic layers (14), wherein the ceramic layers (14) comprise the internal electrodes (12, 12'),
- at least one dielectric layer (15), wherein the dielectric layer (15) is arranged between the internal electrodes (12, 12') as viewed along a stacking direction (20) of the ceramic layers (14), and wherein the dielectric layer (15) is printed onto at least one partial region of one of the ceramic layers (14), wherein the dielectric layer is arranged directly between two ceramic layers (14),
**characterized in that**
the dielectric layer (15) does not extend as far as the external electrodes (11, 11').

2. Multilayer component (10) according to Claim 1, wherein the ceramic layers (14) comprise varistor layers.

3. Multilayer component (10) according to Claim 1 or 2,
wherein the dielectric layer (15) has an extent D along the stacking direction (20) of the ceramic layers (14), and wherein 2 µm ≤ D ≤ 6 µm.

4. Multilayer component (10) according to any of the preceding claims,
wherein the dielectric layer (15) is configured and arranged to reduce an overlap area between internal electrodes (12, 12') of opposite polarity.

5. Multilayer component (10) according to any of the preceding claims,
wherein the at least one dielectric layer (15), in a direction (21) perpendicular to the stacking direction (20), is divided into at least two sections (16) separated from one another, wherein the sections (16) are separated from one another by a material of the ceramic layer (14).

6. Multilayer component (10) according to Claim 5, wherein a cutout (16a) between the sections (16) has an angular cross section.

7. Multilayer component (10) according to Claim 5, wherein a cutout (16a) between the sections (16) has a round cross section.

8. Multilayer component (10) according to any of the preceding claims,
wherein the at least one dielectric layer (15) comprises magnesium titanate.

9. Multilayer component (10) according to any of the preceding claims,
wherein the dielectric layer (15) is configured and arranged in such a way that together with at least two adjacent ceramic layers (14) and two overlapping internal electrodes (12, 12') it forms an ESD discharge path.

10. Multilayer component (10) according to any of the preceding claims,
wherein the multilayer component (10) has the function of a varistor as ESD protection component.

11. Multilayer component (10) according to any of the preceding claims,
wherein the multilayer component (10) has a capacitance of ≤ 0.5 pF.

12. Multilayer component (10) according to any of the preceding claims with a plurality of dielectric layers (15), wherein the dielectric layers (15) are arranged one above another between the internal electrodes (12, 12') as viewed along a stacking direction (20) of the ceramic layers (14), wherein each of the dielectric layers (15) is printed onto a respective partial region of one of the ceramic layers (14) and wherein the dielectric layers (15) each have an extent D where 2 µm ≤ D ≤ 6 µm along the stacking direction (20) of the ceramic layers (14) .

13. Multilayer component (10) according to any of the preceding claims,
wherein the main body of the multilayer component (10) is terminated by a dielectric carrier material (13) in the stacking direction (20).

14. Method for producing a multilayer component (1) having the function of a varistor as ESD protection component, wherein the method comprises the following steps:
- providing ceramic layers (14), wherein the ceramic layers (14) comprise varistor layers,
- applying an electrode material to a surface of a portion of the ceramic layers (14) in order to form internal electrodes (12, 12'),
- partly printing the surface of at least one ceramic layer (14) with a dielectric material in order to form at least one dielectric layer (15),
- stacking the ceramic layer (14) printed with the dielectric material between the ceramic layers (14) provided with the electrode material,
- pressing the ceramic layers (14) in order to form a main body,
- arranging external electrodes (11, 11') on opposite outer sides of the main body,
- sintering the main body,
wherein the dielectric layer is arranged directly between two ceramic layers (14), **characterized in that**
the dielectric layer (15) does not extend as far as the external electrodes (11, 11').

15. Method according to Claim 14,
wherein the dielectric material is applied to the at least one ceramic layer (14) by means of screen printing or inkjet printing.

16. Method according to Claim 14 or 15,
wherein the dielectric material comprises magnesium titanate.

17. Method according to any of Claims 14 to 16,
wherein the dielectric material is applied as paste or ink to the ceramic layer (14).

18. Method according to any of Claims 14 to 17,
wherein the surface of each of a plurality of ceramic layers (14) is partly printed with the dielectric material, such that after stacking the multilayer component comprises a plurality of dielectric layers (15), wherein the dielectric layers (15) are arranged one above another between the internal electrodes (12, 12') as viewed along a stacking direction (20) of the ceramic layers (14), wherein each of the dielectric layers (15) is printed onto a respective partial region of one of the ceramic layers (14) and wherein the dielectric layers (15) each have an extent D where 2 µm ≤ D ≤ 6 µm along the stacking direction (20) of the ceramic layers (14).

19. Method according to any of Claims 14 to 18,
wherein the partial region of the multilayer component (10) is terminated with a dielectric carrier material (13) in the stacking direction (20) .

## Revendications

1. Composant multicouche (10) comportant un corps de base comprenant
- au moins deux électrodes extérieures (11, 11'),
- au moins une première et une deuxième électrode intérieure (12, 12'), chaque électrode intérieure (12, 12') étant reliée électriquement à une électrode extérieure (11, 11'),
- une pluralité de couches céramiques (14), les couches céramiques (14) comprenant les électrodes intérieures (12, 12'),
- au moins une couche diélectrique (15), la couche diélectrique (15) étant disposée entre les électrodes intérieures (12, 12') lorsqu'elle est observée le long d'une direction d'empilement (20) des couches céramiques (14), et la couche diélectrique (15) étant imprimée sur au moins une partie de l'une des couches céramiques (14), la couche diélectrique étant disposée directement entre deux couches céramiques (14),
**caractérisé en ce que**
la couche diélectrique (15) ne s'étend pas jusqu'aux électrodes extérieures (11, 11').

2. Composant multicouche (10) selon la revendication 1, les couches céramiques (14) comportant des couches de varistances.

3. Composant multicouche (10) selon la revendication 1 ou 2, la couche diélectrique (14) présentant une extension D le long de la direction d'empilement (20) des couches céramiques (14), avec 2 µm ≤ D ≤ 6 µm.

4. Composant multicouche (10) selon l'une des revendications précédentes, la couche diélectrique (15) étant conçue et disposée pour réduire une surface de chevauchement entre des électrodes intérieures (12, 12') de polarités opposées.

5. Composant multicouche (10) selon l'une des revendications précédentes, l'au moins une couche diélectrique (15) étant divisée en au moins deux portions (16) séparées l'une de l'autre dans une direction (21) perpendiculaire à la direction d'empilement (20), les portions (16) étant séparées les unes des autres par un matériau de la couche céramique (14) .

6. Composant multicouche (10) selon la revendication 5, un évidement (16a) entre les portions (16) ayant une section transversale angulée.

7. Composant multicouche (10) selon la revendication 5, un évidement (16a) entre les portions (16) ayant une section transversale ronde.

8. Composant multicouche (10) selon l'une des revendications précédentes, l'au moins une couche diélectrique (15) comportant du titanate de magnésium.

9. Composant multicouche (10) selon l'une des revendications précédentes, la couche diélectrique (15) étant conçue et disposée de manière à former, conjointement avec au moins deux couches céramiques adjacentes (14) et deux électrodes intérieures (12, 12') qui se chevauchent, un chemin de décharge ESD.

10. Composant multicouche (10) selon l'une des revendications précédentes, le composant multicouche (10) ayant la fonction d'une varistance comme composant de protection ESD.

11. Composant multicouche (10) selon l'une des revendications précédentes, le composant multicouche (10) ayant une capacité ≤ 0,5 pF.

12. Composant multicouche (10) selon l'une des revendications précédentes comprenant un grand nombre de couches diélectriques (15), les couches diélectriques (15) étant disposées, lorsqu'elles sont observées le long d'une direction d'empilement (20) des couches céramiques (14), les unes sur les autres entre les électrodes intérieures (12, 12'), chacune des couches diélectriques (15) étant imprimée sur une zone respective de l'une des couches céramiques (14) et les couches diélectriques (15) présentant chacune une extension D, avec 2 µm ≤ D ≤ 6 µm, le long de la direction d'empilement (20) des couches céramiques (14) .

13. Composant multicouche (10) selon l'une des revendications précédentes, le corps de base du composant multicouche (10) étant fermé par un matériau de support diélectrique (13) dans la direction d'empilement (20).

14. Procédé de fabrication d'un composant multicouche (1) qui a la fonction d'une varistance comme composant de protection ESD, le procédé comprenant les étapes suivantes:
- fournir des couches céramiques (14), les couches céramiques (14) comportant des couches de varistances,
- appliquer un matériau d'électrode sur une surface d'une partie des couches céramiques (14) pour former des électrodes intérieures (12, 12'),
- imprimer partiellement la surface d'au moins une couche céramique (14) avec un matériau diélectrique pour former au moins une couche diélectrique (15),
- empiler la couche céramique (14) imprimée avec le matériau diélectrique entre les couches céramiques (14) pourvues du matériau d'électrode,
- presser les couches céramiques (14) pour former un corps de base,
- disposer des électrodes extérieures (11, 11') sur des côtés extérieurs opposés du corps de base,
- fritter le corps de base,
la couche diélectrique étant disposée directement entre deux couches céramiques (14),
**caractérisé en ce que**
la couche diélectrique (15) ne s'étend pas jusqu'aux électrodes extérieures (11, 11').

15. Procédé selon la revendication 14,
le matériau diélectrique étant appliqué par sérigraphie ou impression à jet d'encre sur l'au moins une couche céramique (14).

16. Procédé selon la revendication 14 ou 15,
le matériau diélectrique comportant du titanate de magnésium.

17. Procédé selon l'une des revendications 14 à 16,
le matériau diélectrique étant appliqué sous forme de pâte ou d'encre sur la couche céramique (14).

18. Procédé selon l'une des revendications 14 à 17,
la surface d'un grand nombre de couches céramiques (14) étant partiellement imprimée avec le matériau diélectrique de sorte que le composant multicouche comporte un grand nombre de couches diélectriques (15) après l'empilement, les couches diélectriques (15) étant disposées, lorsqu'elles sont vues le long d'une direction d'empilement (20) des couches céramiques (14), les unes sur les autres entre les électrodes intérieures (12, 12'), chacune des couches diélectriques (15) étant imprimée sur une partie respective de l'une des couches céramiques (14) et les couches diélectriques (15) présentant chacune une extension D, avec 2 µm ≤ D ≤ 6 µm, le long de la direction d'empilement (20) des couches céramiques (14) .

19. Procédé selon l'une des revendications 14 à 18, le corps de base du composant multicouche (10) étant fermé avec un matériau de support diélectrique (13) dans la direction d'empilement (20).
